# EUROPÄISCHE PATENTSCHRIFT

(11) **EP 1 062 279 B1**
(45) Veröffentlichungstag und Bekanntmachung des Hinweises auf die Patenterteilung: **10.09.2003**
(21) Anmeldenummer: 99910302.1
(22) Anmeldetag: 27.02.1999
(51) Int. Cl.: C09B 62/085, C09B 62/51, C09B 67/22

(54) **REAKTIVFARBSTOFFE MIT EINEM KOMBINATIONSANKER**
REACTIVE DYES WITH A COMBINATION ANCHOR
COLORANTS REACTIFS COMPORTANT UN ELEMENT D'ANCRAGE COMBINE

(30) Priorität: 13.03.1998 DE 19810906
(43) Veröffentlichungstag der Anmeldung: 27.12.2000
(73) Patentinhaber: DyStar Textilfarben GmbH & Co. Deutschland KG, 65926 Frankfurt am Main (DE)
(72) Erfinder: PRECHTL, Frank, D-60318 Frankfurt (DE); PATSCH, Manfred, D-67157 Wachenheim (DE)
(86) Internationale Anmeldenummer: EP9901292
(87) Internationale Veröffentlichungsnummer: WO99047608

(56) Entgegenhaltungen:
- EP-A- 0 074 928
- EP-A- 0 369 385
- EP-A- 0 775 730
- DE-A- 4 434 989
- DE-A- 19 619 239
- JP-A- 57 199 877
- JP-A- 62 167 364

## Beschreibung

Die vorliegende Erfindung betrifft neue rote Reaktivfarbstoffe der Formel I 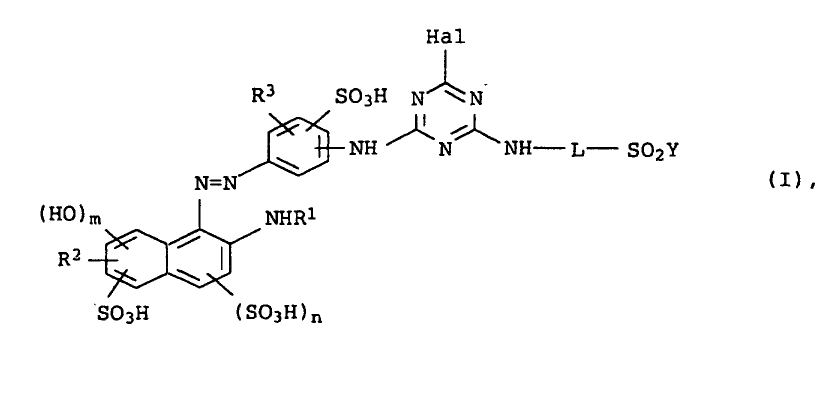 in der
- n: 0 oder 1
- m: 0 oder 1
- Y: Vinyl oder einen Rest der Formel C₂H₄Q, worin Q für eine unter alkalischen Reaktionsbedingungen abspaltbare Gruppe steht,
- L: C₂-C₆-Alkylen, das durch 1 oder 2 nichtbenachbarte Sauerstoffatome oder 1 oder 2 Iminogruppen unterbrochen sein kann, oder Cyclohexylen,

Hal Fluor oder Chlor,
- R¹: Wasserstoff oder Hydroxysulfonylmethyl,
- R²: Wasserstoff oder Hydroxysulfonylmethyl und
- R³: Carboxyl oder Hydroxysulfonyl oder außerdem, wenn R¹ und/oder R² für Hydroxysulfonylmethyl stehen, auch Wasserstoff
bedeuten, ihre Mischungen sowie ihre Verwendung zum Färben oder Bedrucken von Hydroxygruppen oder Stickstoffatome aufweisenden Substraten.

Die EP-A-074 928 beschreibt ähnliche Azofarbstoffe mit einem Sulfato- oder Hydroxyethylsulfonyl-ethylaminochlortriazinaminorest an der Sulfophenyldiazokomponente.

Weiterhin hat die EP-A-772 653 Azofarbstoffe zum Gegenstand, die aus an der Aminogruppe sulfomethylierter γ-Säure und einer Diaminobenzolsulfonsäure als Diazokomponente, deren eine Aminogruppe über einen Chlortriazinaminorest mit Sulfatoethylsulfonylbenzol verbrückt ist, hergestellt werden.

Die EP-A-499 588 lehrt Farbstoffe mit einem Chlorethylsulfonylethylaminochlortriazinrest an der Sulfophenyldiazokomponente, die auf γ-Säure gekuppelt wurde.

Nach wie vor stellen rote lichtechte Reaktivfarbstoffe eine große Marktlücke dar. So sind auch die Farbstoffe des Standes der Technik hinsichtlich ihren anwendungstechnischen Eigenschaften, insbesondere ihren Lichtechtheiten, unbefriedigend.

Daher war es Aufgabe der vorliegenden Erfindung, rote Farbstoffe mit einem vorteilhaften Eigenschaftsprofil, insbesondere guten Naß- und Lichtechtheiten, zur Verfügung zu stellen.

Demgemäß wurden die eingangs näher bezeichneten Reaktivfarbstoffe der Formel I gefunden, ihre Mischungen, sowie ihre Verwendung zum Färben oder Bedrucken von Hydroxygruppen oder Stickstoffatome aufweisenden Substraten.

Die neuen Reaktivfarbstoffe der Formel I sind jeweils in Form der freien Säure angegeben. Selbstverständlich werden auch ihre Salze von der Erfindung umfaßt.

Hierbei geeignete Kationen leiten sich von Metall- oder Ammoniumionen ab. Metallionen sind insbesondere die Lithium-, Natriumoder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 oder 2 Hydroxygruppen substituiert und/oder durch 1 bis 4 Sauerstoffatomen in Etherfunktion unterbrochen sein kann.

Generell können alle, sowohl die obengenannten wie auch in den nachfolgenden Formeln auftretenden Alkyl-, Alkenyl- und Alkylengruppen, sowohl geradkettig als auch verzweigt sein.

Reste Q sind z.B. Chlor, Brom, C₁-C₄-Alkylsulfonyl, Phenylsulfonyl, OSO₃H, SSO₃H, OP(O) (OH)₂, C₁-C₄-Alkylsulfonyloxy, Phenylsulfonyloxy, C₁-C₄-Alkanoyloxy, C₁-C₄-Dialkylamino oder ein Rest der Formel 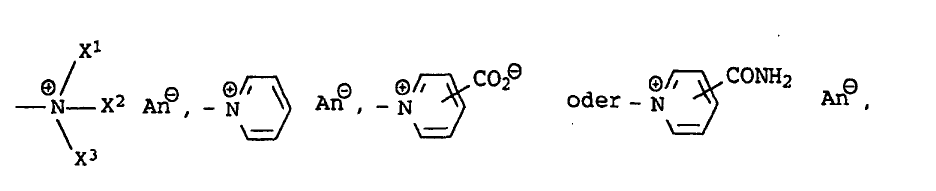 wobei X¹, X² und X³ gleich oder verschieden sind und unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Reste L sind z.B. (CH₂)₂, (CH₂)₃, (CH₂)₄, CH(CH₃)CH₂, CH(CH₃)CH(CH₃), (CH₂)₅, (CH₂)₆, (CH₂)₂O(CH₂)₂, (CH₂)₃O(CH₂)₂, (CH₂)₂O(CH₂)₂O(CH₂)₂, (CH₂)₂NH(CH₂)₂, (CH₂)₃NH(CH₂)₂ oder (CH₂)₂NH (CH₂)₂NH (CH₂)₂.

Aromatische Diamine, die sich als Diazokomponente und zugleich Verknüpfungsstelle zum Cyanurhalogenid eignen, sind beispielsweise 2,4-Diaminobenzolsulfonsäure, 2,5-Diaminobenzolsulfonsäure, 4,6-Diaminobenzol-1,3-disulfonsäure und 2,5-Diaminobenzol-1,4-disulfonsäure.

Als geeignete Kupplungskomponenten sind beispielhaft als Aminonaphthalinsulfonsäuren 2-Naphthylamin-3,6-disulfonsäure, 2-Naphthylamin-5,7-disulfonsäure, 2-Naphthylamin-6,8-disulfonsäure, 2-Hydroxysulfonylmethylaminonaphthalin-5-sulfonsäure oder 2-Hydroxysulfonylmethylaminonaphthalin-6-sulfonsäure zu nennen.

Ferner sind als Kupplungskomponente Aminonaphtholsulfonsäuren wie 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 2-Amino-7-hydroxysulfonylmethyl-8-hydroxynaphthalin-6-sulfonsäure, 2-Hydroxysulfonylmethylamino-8-hydroxynaphthalin-6-sulfonsäure, 2-Hydroxysulfonylmethylamino-7-hydroxysulfonylmethyl-8-hydroxynaphthalin-6-sulfonsäure geeignet.

Bevorzugt werden Reaktivfarbstoffe der Formel I, in denen R³ für Carboxyl oder bevorzugt Hydroxysulfonyl steht.

Außerdem wurden Reaktivfarbstoffe der Formel I bevorzugt, in denen R¹ für Wasserstoff steht.

Ferner werden Reaktivfarbstoffe der Formel I bevorzugt, in denen R³ für Wasserstoff und R¹ für Hydroxysulfonylmethyl steht.

Des weiteren werden Reaktivfarbstoffe der Formel I bevorzugt mit Y für Vinyl oder 2-Sulfatoethyl, 2-Thiosulfatoethyl, 2-Chlorethyl oder Acetoxyethyl im faserreaktion Rest -SO₂Y.

Reaktivfarbstoffe mit Kupplungskomponenten der allgemeinen Formel II a-d 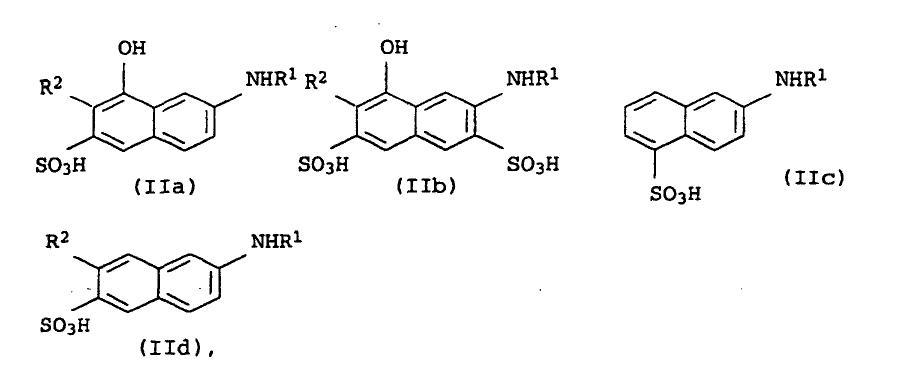 in denen R¹ und R² die oben genannte Bedeutung haben, werden ferner bevorzugt.

Insbesondere werden Farbstoffe der allgemeinen Formel III 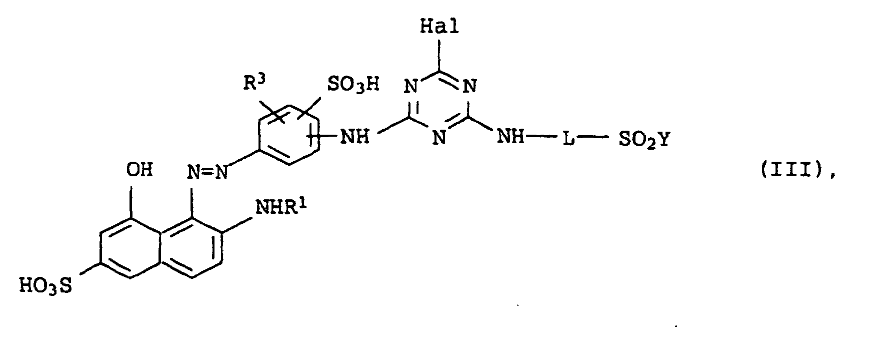 in der R¹, R³, Hal, L und Y die oben genannte Bedeutung haben, bevorzugt.

Ferner werden Reaktivfarbstoffe der Formel I in der L für Ethylen steht bevorzugt.

Bevorzugt werden vor allem Farbstoffe der allgemeinen Formel I und III sowie solche mit Kupplungskomponenten der Formel IIa-d, in denen R¹ Hydroxysulfonylmethyl bedeutet.

Außerdem werden Reaktivfarbstoffe bevorzugt, in denen die Hydroxysulfonylgruppe im Phenylring in ortho-Position zur Diazogruppe steht.

Die neuen Reaktivfarbstoffe der allgemeinen Formel I können auf an sich bekannte Weise erhalten werden.

Beispielsweise kann man ein Phenylendiamin der Formel 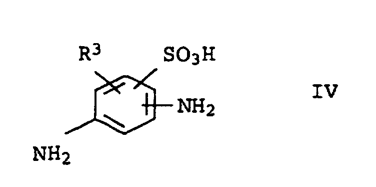 in der R³ die obengenannte Bedeutung hat, mit Trihalogentriazin zu Verbindungen der Formel 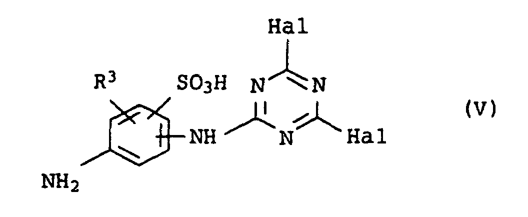 umsetzen. Diese Amine der Formel V werden auf bekannte Weise diazotiert und sauer auf Kupplungskomponenten der Formel II 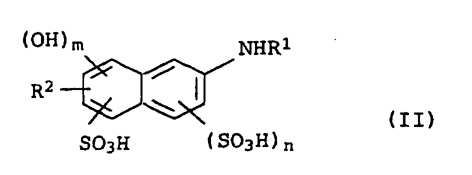 in der R¹, R², m und n die obengenannte Bedeutung haben, gekuppelt. Durch Umsetzung des so erhaltenen Azofarbstoffs mit einem Amin der Formel

H₂N-L-SO₂Y (VI),

in wässriger Lösung bei pH 5 bis 6 erhält man die erfindungsgemäßen Farbstoffe.

Die Reihenfolge der einzelnen Reaktionsstufen ist beliebig. So wird nach einer weiteren Verfahrensvariante zuerst am Amin der Formel V Halogen gegen das Amin der Formel VI substituiert und anschließend diazotiert und auf die Naphthalinsulfonsäure der Formel II gekuppelt.

Mit Hydroxysulfonyl substituierte Naphthalinsulfonsäuren werden auf bekanntem Wege durch Umsetzung mit Hydroxymethansulfonsäure erhalten.

Die vorliegende Erfindung betrifft weiterhin Mischungen der Farbstoffe der Formel I mit 0,1 bis 30 Gewichtsteilen eines oder mehrerer roter, oranger, gelber oder blauer Farbstoffe bezogen auf 100 Gewichtsteile Reaktivfarbstoff I.

Geeignete gelbe Reaktivfarbstoffe sind z.B. in der US-A-5 182 371 beschrieben. Weiterhin sind folgende Farbstoffe zu nennen: C.I. Reactive Yellow 145, C.I. Reactive Yellow 168 oder C.I. Reactive Yellow 176.

Geeignete orange Reaktivfarbstoffe gehorchen z.B. der Formel 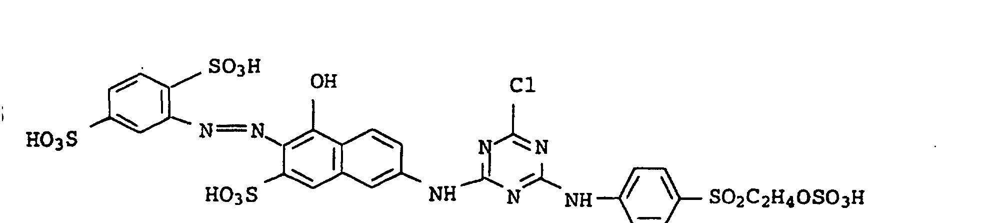 oder 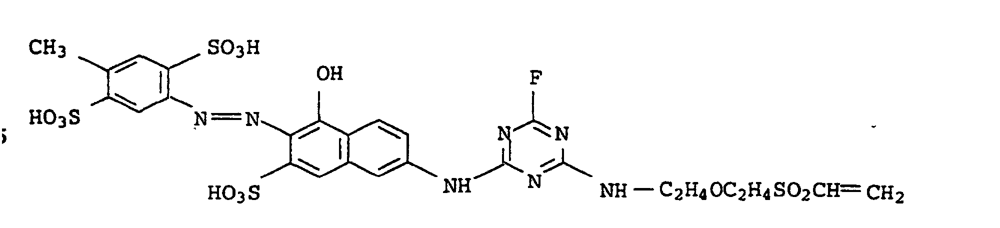 Weiterhin sind folgende Farbstoffe zu nennen: C.I. Reactive Orange 7 (17 756), C.I. Reactive Orange 15, C.I. Reactive Orange 16 (17 757), C.I. Reactive Orange 56, C.I. Reactive Orange 57, C.I. Reactive Orange 72 (17 754), C.I. Reactive Orange 74, C.I. Reactive Orange 82, C.I. Reactive Orange 83 oder C.I. Reactive Orange 90.

Geeignete rote Reaktivfarbstoffe sind z.B. in der US-A-5 200 511 beschrieben. Weiterhin sind folgende Farbstoffe zu nennen: C.I. Reactive Red 35, C.I. Reactive Red 103, C.I. Reactive Red 113, C.I. Reactive Red 180, C.I. Reactive Red 194, C.I. Reactive Red 195, C.I. Reactive Red 198, C.I. Reactive Red 222, C.I. Reactive Red 223, C.I. Reactive Red 227, C.I. Reactive Red 228 oder C.I. Reactive Red 239.

Geeignete Farbstoffe gehorchen insbesondere der Formel VII 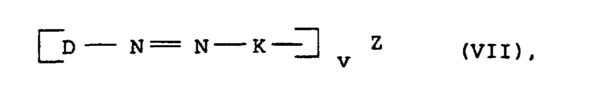 in der
- v: 1 oder 2,
- K: einen Rest der Formel 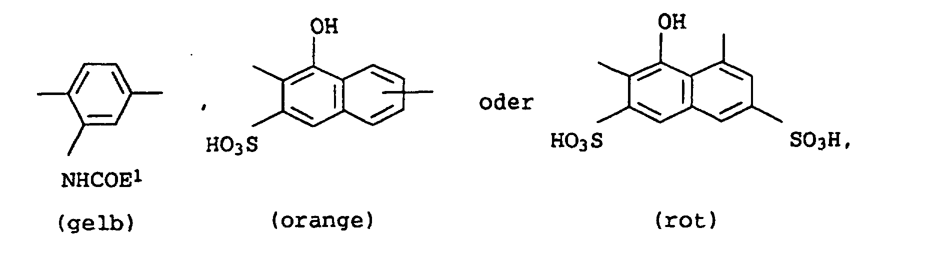
worin jeweils der linke Bindungsstrich die Bindung zur Azobrücke darstellt,
- E¹: für C₁-C₄-Alkyl, das gegebenenfalls durch Hydroxy substituiert ist, Phenyl, Amino, oder einen Rest der Formel

NH― L¹― SO₂― C₂H₄ ― Q,
- D: einen Benzol- oder Naphthalinrest, der jeweils einen faser-reaktiven Rest aufweisen kann und gegebenenfalls ein- bis dreifach durch C₁-C₄-Alkyl, C₁-C₄-Alkoxy, Hydroxy oder Hydroxysulfonyl substituiert ist, und
- Z: C₁-C₄-Alkanoylamino, das gegebenenfalls durch Carboxyl substituiert ist, Benzoylamino oder einen Rest der Formel 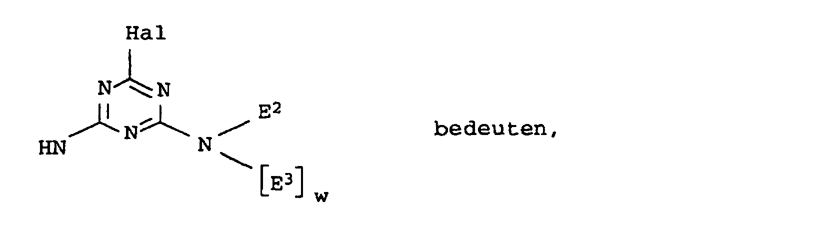
worin
- w: für 0 oder 1,
- Hal: für Fluor oder Chlor,
- E²: für Wasserstoff oder C₁-C₄-Alkyl, das durch ein Sauerstoffatom in Etherfunktion unterbrochen sein kann und gegebenenfalls durch Hydroxy substituiert ist, und
- E³: für ein- oder zweifach durch Hydroxysulfonyl substituiertes Phenyl oder einen Rest der Formel 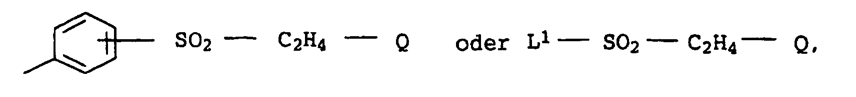 steht, wobei Q jeweils die obengenannte Bedeutung und L¹ jeweils die Bedeutung von C₂-C₄-Alkylen, das durch 1 Sauerstoffatom in Etherfunktion unterbrochen sein kann, besitzen.

Geeignete blaue Reaktivfarbstoffen sind z.B. C.I. Reactive Blue 171, C.I. Reactiv Blue 160, C.I. Reactiv Blue 191, C.I. Reactive Blue 198, C.I. Reactive Blue 211, C.I. Reactiv Blue 71 oder Reactiv Black 5.

Die Einzelfarbstoffe der neuen Farbstoffmischungen sind bekannt und nach dem Fachmann geläufigen Herstellungsverfahren zugänglich. Einige, wie beispielsweise Reactive Black 5 sind handelsüblich. Die neuen Farbstoffmischungen sind durch mechanisches Mischen der Einzelkomponenten zugänglich.

Die neuen Reaktivfarbstoffe der Formel I sowie ihre erfindungsgemäßen Mischungen eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Weiterhin eignen sich die Farbstoffe und ihre Mischungen zum Bedrucken von Papier und Textilien mit Inkjet-Tinten. In den Tinten liegt der Farbstoff in wäßriger Lösung, gegebenenfalls im Gemisch mit wasserlöslichen organischen Lösungsmittel vor. Die erfindungsgemäßen Farbstoffe können auch zum Färben von keratinischen Fasern, z.B. bei der Haarfärbung oder der Färbung von Pelzen, verwendet werden. Vorzugsweise eignen sich die neuen Farbstoffe zum Färben und Bedrucken von Textilmaterial auf der Basis von Wolle oder insbesondere von Baumwolle.

Insbesondere auf Substraten auf Basis von Cellulose werden farbstarke Färbungen mit sehr hoher Fixierausbeute erhalten, die eine sehr gute Lichtechtheit sowie vorzügliche Naßechtheiten, wie Wasch-, Chlorbleich-, Peroxidbleich-, Alkali-, Meerwasser- oder Schweißechtheit, aufweisen.

Die folgenden Beispiele sollen die Erfindung näher erläutern.

### Beispiel 1:

40,3 g Cyanurchlorid wurden in 250 ml Aceton gelöst, zu 250 ml Eiswasser und 0,2g eines Netzmittels gegeben. Dazu gab man bei 0 - 5°C 60,1 g 4,6-Diaminobenzol-1,3-disulfonsäure und stellte mit Natriumhydrogencarbonat einen pH von 4 - 6 ein. Nach beendeter Reaktion wurde klärfiltriert, das Filtrat mit 100 ml Salzsäure (30 gew.-%) versetzt und bei 0 - 5°C portionsweise mit 63 ml einer 23 gew.-%igen Natriumnitritlösung versetzt. Der schwache Nitritüberschuß wurde durch Zugabe von etwas Amidosulfonsäure zerstört.

Zu dieser Reaktionsmischung wurden 50,2 g 2-Amino-8-hydroxynaphthalin-6-sulfonsäure zugegeben und mit Natriumhydrogencarbonat ein pH von 2 - 3 eingestellt und man ließ langsam auf 20°C erwärmen. Nachdem keine Diazoverbindung mehr nachweisbar war, wurde der pH-Wert mit Natriumhydrogencarbonat auf 5 - 6 angehoben, die Reaktionsmischung klärfiltriert und der Farbstoff durch Zugabe von 200g Natriumchlorid gefällt und abgesaugt.

77,0 g dieser feuchten Paste wurden in 400 ml Wasser angerührt, mit einer schwefelsauren Lösung aus 17,5 g 2-(ß-Sulfatoethylsulfonyl)ethylamin in 450 ml Wasser versetzt und mit Natriumhydrogencarbonat ein pH von 5 - 6 eingestellt. Nachdem kein Dichlorfarbstoff mehr nachweisbar war, wurde der Farbstoff durch Zugabe von 350 g Natriumchlorid gefällt, abgesaugt und im Vakuum bei 40°C getrocknet. Man erhielt ein sich leicht in Wasser lösendes rötliches Pulver des Farbstoffs der Formel 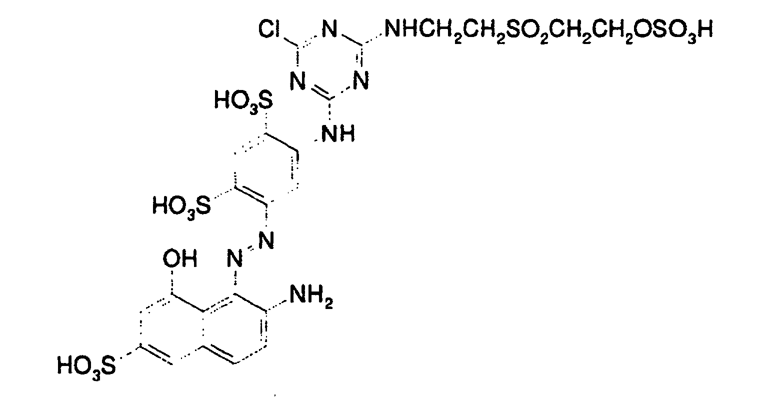 der auf Baumwolle gefärbt gute Licht- und Naßechtheiten zeigt.

Analog zu Beispiel 1 wurden unter Verwendung der in Tabelle 1 aufgeführten Phenylendiamine und Kupplungskomponenten folgende Verbindungen hergestellt:

**Tabelle 1**

| Bsp. | Phenylendiamin | Kupplungskomponente | Farbton |
|---|---|---|---|
| 2 | 2,4-Diaminobenzolsulfonsäure | 2-Hydroxysulfonylmethylamino-8-hydroxynaphthalin-6-sulfonsäure | blaustichiges Rot |
| 3 | 2,4-Diaminobenzolsulfonsäure | 2-Hydroxysulfonylmethylamino-8-hydroxynaphthalin-3,6-disulfonsäure | blaustichiges Rot |
| 4 | 2,4-Diaminobenzolsulfonsäure | 2-Hydroxysulfonylmethylaminonaphthalin-6-sulfonsäure | Scharlachrot |
| 5 | 2,5-Diaminobenzolsulfonsäure | 2-Hydroxysulfonylmethylamino-8-hydroxynaphthalin-6-sulfonsäure | blaustichiges Rot |
| 6 | 2,4-Diaminobenzolsulfonsäure | 2-Hydroxysulfonylmethylamino-8-hydroxynaphthalin-3,6-disulfonsäure | blaustichiges Rot |
| 7 | 2,4-Diaminobenzolsulfonsäure | 2-Hydroxysulfonylmethylaminonaphthalin-6-sulfonsäure | Scharlachrot |

### Beispiel 8

a) 168,5 g des Phenylendiamins 4,6-Diaminobenzol-1,3-disulfonsäure wurden in 500 ml Eiswasser bei pH 2 angerührt und mit 0,4 g eines Netzmittels versetzt. Dazu gab man bei 0 - 5°C eine Lösung aus 116 g Cyanurchlorid in 600 ml Aceton und hielt einen pH von 2-4 durch Zugabe von Natriumhydrogencarbonat.
   Dazu gab man 154 g einer schwefelsauren Paste von 2-(β-Sulfatoethylsulfonyl)ethylamin und rührte bei 30°C und pH 5 - 6, bis keine Dichlortriazinverbindung mehr nachweisbar war. Das Produkt der Formel 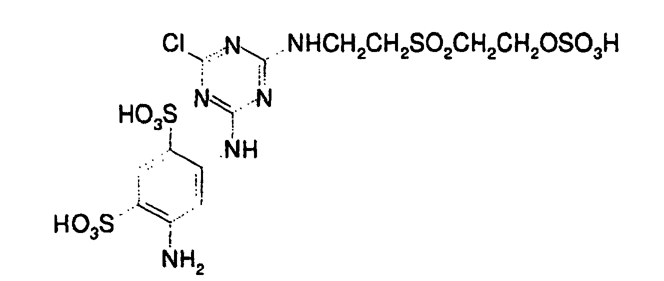 wurde bei pH 0,5 - 1 durch Zugabe von 600 g Natriumchlorid gefällt, abgesaugt und im Vakuum getrocknet.
b) 37 g der unter a) hergestellten Verbindung wurden in 1400 ml Eiswasser, 400 ml Aceton und 25 ml Salzsäure (30 gew.-%) angerührt und portionsweise mit 15 ml einer 23 gew.-%igen Natriumnitritlösung versetzt. Der schwache Nitritüberschuß wurde mit etwas Amidosulfonsäure zersetzt. Hierzu gab man bei 0 - 5°C 25,9 g 2-Amino-8-hydroxy-3,6-disulfonsäure, hielt den pH-Wert mit Natriumacetat bei 2 - 3 und ließ langsam auf 20°C erwärmen. Die Reaktionsmischung wurde mit Natriumhydrogencarbonat auf pH 5 gestellt, klärfiltriert und der Farbstoff durch Zugabe von 300 g Natriumchlorid ausgefällt. Nach dem Trocknen im Vakuum erhielt man den Farbstoff der Formel 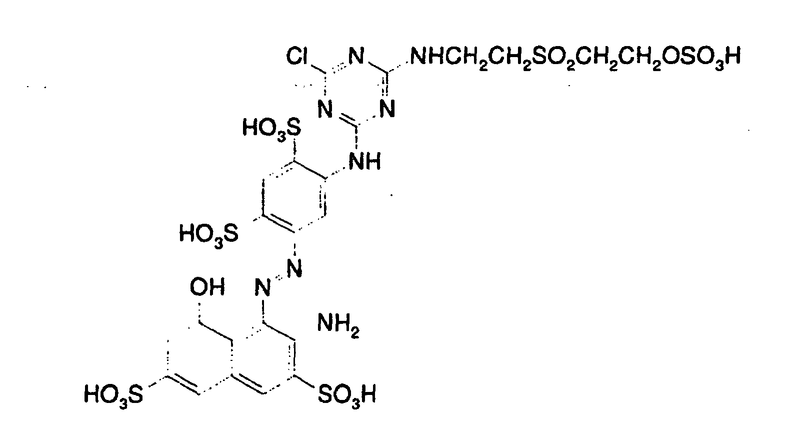
als ein sich leicht in Wasser lösendes rötliches Pulver.

Analog zu Beispiel 8 wurden unter Verwendung der In Tabelle 2 aufgeführten Phenylendiamine, bzw. Kupplungskomponenten folgende Verbindungen hergestellt:

**Tabelle 2**

| Bsp. | Phenylendiamin | Kupplungskomponente | Farbton |
|---|---|---|---|
| 9 | 4,6-Diaminobenzol-1,3-disulfonsäure | 2-Naphthylamin-6-sulfonsäure | Scharlachrot |
| 10 | 4,6-Diaminobenzol-1,3-disulfonsäure | 2-Naphthylamin-5-sulfonsäure | Scharlachrot |
| 11 | 4,6-Diaminobenzol-1,3-disulfonsäure | 2-Hydroxysulfonylmethylamino-8-hydroxynaphthalin-6-sulfonsäure | Blaustichiges Rot |
| 12 | 4,6-Diaminobenzol-1,3-disulfonsäure | 2-Hydroxysulfonylmethylamino-8-hydroxynaphthalin-3,6-disulfonsäure | Blaustichiges Rot |
| 13 | 4,6-Diaminobenzol-1,3-disulfonsäure | 2-Hydroxysulfonylmethylaminonaphthalin-6-sulfonsäure | Scharlachrot |
| 14 | 4,6-Diaminobenzol-1,3-disulfonsäure | 7-Hydroxysulfonylmethyl-2-amino-8-hydroxynaphthalin-6-sulfonsäure | Blaustichiges Rot |
| 15 | 2,5-Diaminobenzol-1,4-disulfonsäure | 2-Naphthylamin-6-sulfonsäure | Rot |
| 16 | 2,5-Diaminobenzol-1,4-disulfonsäure | 2-Naphthylamin-5-sulfonsäure | Rot |
| 17 | 2,5-Diaminobenzol-1,4-disulfonsäure | 2-Hydroxysulfonylmethylamino-8-hydroxynaphthalin-6-sulfonsäure | Blaustichiges Rot |
| 18 | 2,5-Diaminobenzol-1,4-disulfonsäure | 2-Hydroxysulfonylmethylamino-8-hydroxynaphthalin-3,6-disulfonsäure | Blaustichiges Rot |
| 29 | 2,5-Diaminobenzol-1,4-disulfonsäure | 2-Hydroxysulfonylmethylaminonaphthalin-6-sulfonsäure | Scharlachrot |

## Patentansprüche

1. Reaktivfarbstoffe der allgemeinen Formel I 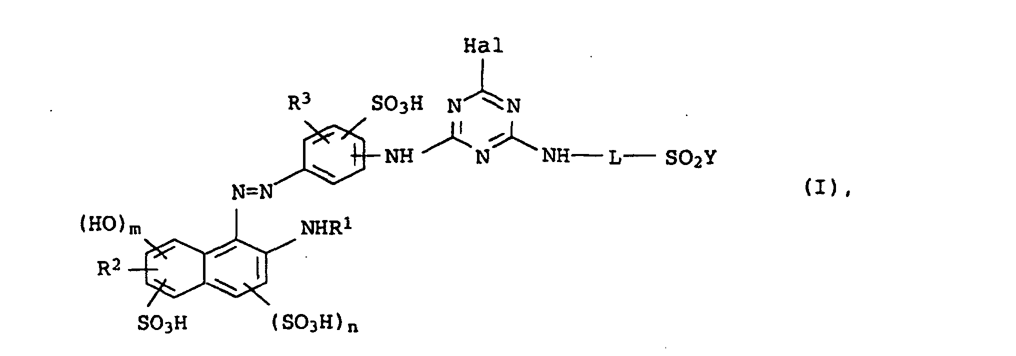 in der
n 0 oder 1
m 0 oder 1
Y Vinyl oder einen Rest der Formel C₂H₄Q, worin Q für eine unter alkalischen Reaktionsbedingungen abspaltbare Gruppe steht,
L C₂-C₆-Alkylen, das durch 1 oder 2 nichtbenachbarte Sauerstoff-atome oder 1 oder 2 Iminogruppen unterbrochen sein kann, oder Cyclohexylen,
Hal Fluor oder Chlor,
R¹ Wasserstoff oder Hydroxysulfonylmethyl,
R² Wasserstoff oder Hydroxysulfonylmethyl und
R³ Carboxyl oder Hydroxysulfonyl oder außerdem, wenn R¹ und/oder R² für Hydroxysulfonylmethyl stehen, auch Wasserstoff bedeuten.

2. Reaktivfarbstoffe nach Anspruch 1, in denen R³ für Carboxyl oder Hydroxysulfonyl steht.

3. Reaktivfarbstoffe nach Anspruch 1 oder 2, in denen R³ für Hydroxysulfonyl steht.

4. Reaktivfarbstoffe nach den Ansprüchen 1 bis 3, in denen R¹ für Hydroxysulfonylmethyl steht.

5. Reaktivfarbstoffe nach Anspruch 1, in denen R³ für Wasserstoff und R¹ für Hydroxysulfonylmethyl steht.

6. Reaktivfarbstoffe nach den Ansprüchen 1 bis 5, in denen Y für Vinyl oder einen Rest der Formel C₂H₄OSO₃H, -C₂H₄SSO₃H, -C₂H₄Cl oder C₂H₄OCOCH₃ bedeutet.

7. Reaktivfarbstoffe nach den Ansprüche 1 bis 6 der allgemeinen Formel III 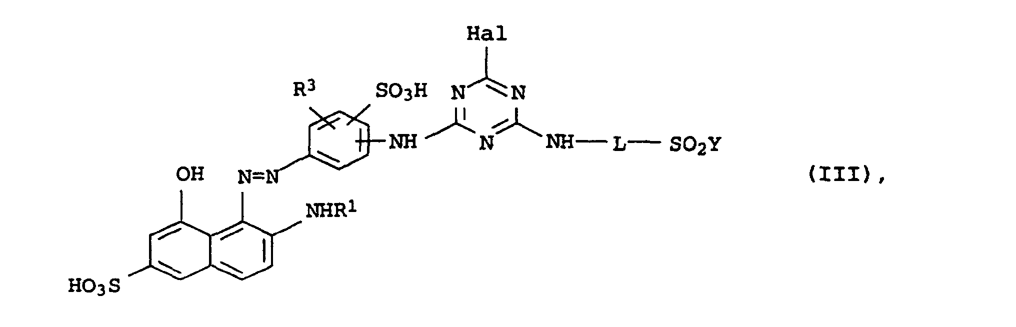 in der R¹, R³, Hal, L und Y die in Anspruch 1 genannte Bedeutung haben.

8. Reaktivfarbstoffe nach en Ansprüchen 1 bis 7, in denen die Hydroxysulfonylgruppe im Phenylring in ortho-Position zur Diazogruppe steht.

9. Mischungen enthaltend Reaktivfarbstoffe I gemäß Anspruch 1 sowie 0,1 bis 30 Gewichtsteile eines roten, orangen, gelben oder blauen Reaktivfarbstoffs bezogen auf 100 Gewichtsteile des Reaktivfarbstoffs I.

10. Verwendung der Reaktivfarbstoffe oder ihrer Mischungen gemäß den Ansprüchen 1 bis 9 zum Färben oder Bedrucken von Hydroxygruppen oder Stickstoffatome aufweisenden Substraten.

11. Hydroxygruppen oder Stickstoffatome aufweisende Substrate, die mit Reaktivfarbstoffen gemäß Anspruch 1 oder deren Mischungen gefärbt oder bedruckt wurden.

## Claims

1. Reactive dyes of the general formula I 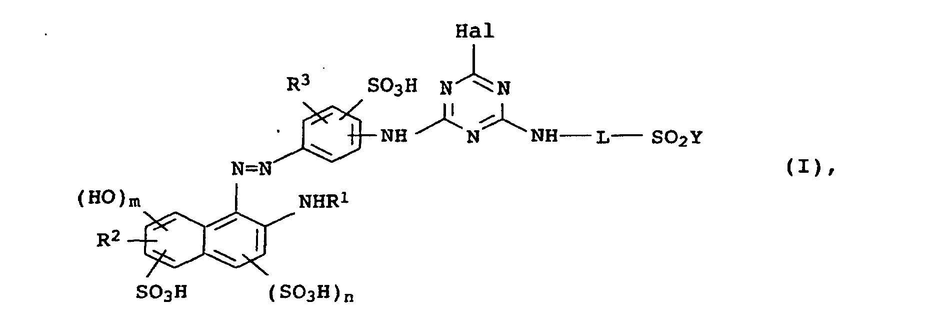 where
n is 0 or 1,
m is 0 or 1,
Y is vinyl or a radical of the formula C₂H₄Q, where Q is an alkali-detachable group,
L is C₂-C₆-alkylene with or without interruption by 1 or 2 nonadjacent oxygen atoms or 1 or 2 imino groups or is cyclohexylene,
Hal is fluorine or chlorine,
R¹ is hydrogen or hydroxysulfonylmethyl,
R² is hydrogen or hydroxysulfonylmethyl, and
R³ is carboxyl or hydroxysulfonyl and may also be hydrogen when R¹ and/or R² are each hydroxysulfonylmethyl.

2. Reactive dyes as claimed in claim 1, wherein R³ is carboxyl or hydroxysulfonyl.

3. Reactive dyes as claimed in claim 1 or 2, wherein R³ is hydroxysulfonyl.

4. Reactive dyes as claimed in any of claims 1 to 3, wherein R¹ is hydroxysulfonylmethyl.

5. Reactive dyes as claimed in claim 1, wherein R³ is hydrogen and R¹ is hydroxysulfonylmethyl.

6. Reactive dyes as claimed in any of claims 1 to 5, wherein Y is vinyl or a radical of the formula C₂H₄OSO₃H, -C₂H₄SSO₃H, -C₂H₄Cl or C₂H₄OCOCH₃.

7. Reactive dyes as claimed in any of claims 1 to 6, of the general formula III 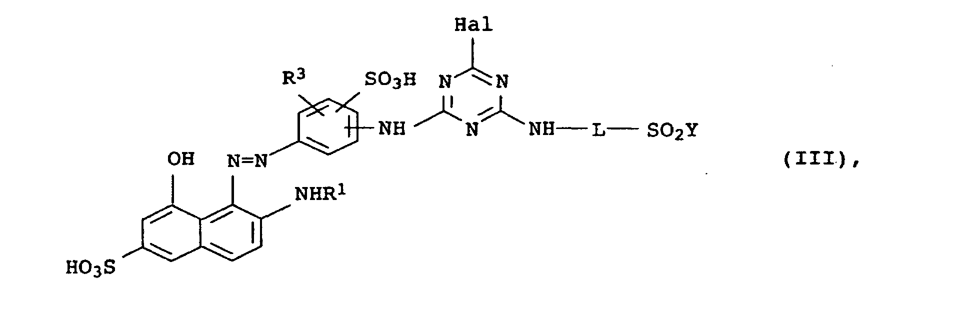 where R¹, R³, Hal, L and Y are each as defined in claim 1.

8. Reactive dyes as claimed in any of claims 1 to 7, wherein the hydroxysulfonyl group in the phenyl ring is ortho to the diazo group.

9. Mixtures comprising reactive dyes I as claimed in claim 1 and also from 0.1 to 30 parts by weight of a red, orange, yellow or blue reactive dye based on 100 parts by weight of reactive dye I.

10. A method of using the reactive dyes or their mixtures of any of claims 1 to 9 for dyeing or printing hydroxyl-containing or nitrogenous substrates.

11. Hydroxyl-containing or nitrogenous substrates which have been dyed or printed with reactive dyes as claimed in claim 1 or with mixtures thereof.

## Revendications

1. Colorants réactifs de la formule générale I 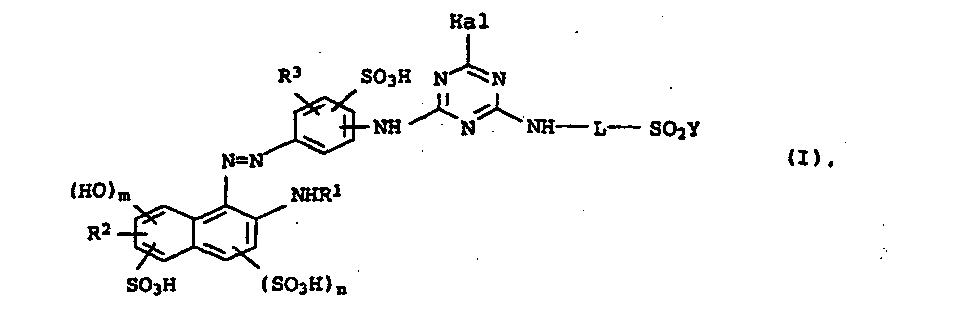 dans laquelle
n est 0 ou 1
m est 0 ou 1
Y est un radical vinyle ou un reste de formule C₂H₄Q, où Q représente un groupe séparable dans des conditions de réaction alcalines,
L est un alkylène en C₂ à C_{6,} qui peut être interrompu par 1 ou 2 atomes d'oxygène non voisins ou 1 ou 2 groupes imino, ou du cyclohexylène,
Hal est du fluor ou du chlore,
R¹ est de l'hydrogène ou un hydroxysulfonylméthyle,
R² est de l'hydrogène ou un hydroxysulfonylméthyle, et
R³ est un carboxyle ou un hydroxysulfonyle ou en outre, lorsque R¹ et/ou R² représentent de l'hydroxysulfonylméthyle, signifie également de l'hydrogène.

2. Colorants réactifs selon la revendication 1, dans lesquels R³ est un carboxyle ou un hydroxysulfonyle.

3. Colorants réactifs selon la revendication 1 ou 2, dans lesquels R³ représente un hydroxysulfonyle.

4. Colorants réactifs selon les revendications 1 à 3, dans lesquels R¹ représente un hydroxysulfonylméthyle.

5. Colorants réactifs selon la revendication 1, dans lesquels R³ représente de l'hydrogène et R¹ un hydroxysulfonylméthyle.

6. Colorants réactifs selon les revendications 1 à 5, dans lesquels Y est un vinyle ou un reste de la formule C₂H₄OSO₃H, -C₂H₄SSO₃H, -C₂H₄Cl ou C₂H₄OCOCH₃.

7. Colorants réactifs selon les revendications 1 à 6 de la formule générale III 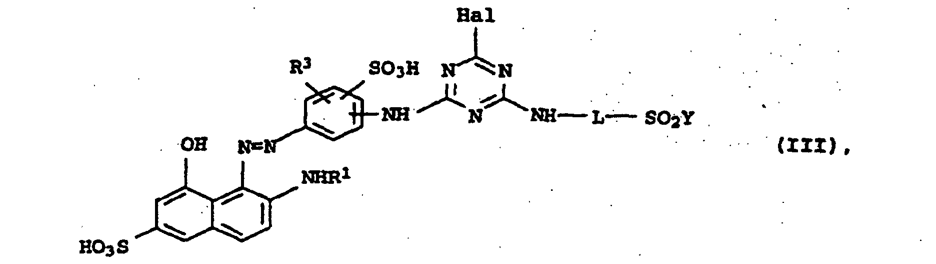 dans laquelle R¹, R³, Hal, L et Y ont les significations mentionnées dans la revendication 1.

8. Colorants réactifs selon les revendications 1 à 7, dans lesquels le groupe hydroxysulfonyle du noyau phényle se trouve en position ortho vis-à-vis du groupe diazo.

9. Mélanges contenant des colorants réactifs I selon la revendication 1 ainsi que de 0,1 à 30 parties en poids d'un colorant réactif rouge, orange, jaune ou bleu par rapport à 100 parties en poids du colorant réactif I.

10. Utilisation des colorants réactifs ou de leurs mélanges selon les revendications 1 à 9 pour la teinture ou l'impression de substrats présentant des groupes hydroxy ou des atomes d'azote.

11. Substrats présentant des groupes hydroxy ou des atomes d'azote, qui sont teints ou imprimés au moyen des colorants réactifs selon la revendication 1 ou de leurs mélanges.
